# EUROPEAN PATENT SPECIFICATION

(11) **EP 2 359 715 B1**
(45) Date of publication and mention of the grant of the patent: **08.05.2013**
(21) Application number: 11154256.9
(22) Date of filing: 11.02.2011
(51) Int. Cl.: A47B 88/04, E05C 1/10

(54) **Cabinet for vans**
Schubladenelement für Transporter und Verfahren zu dessen Montage
Tiroir pour les véhicules de transport et procédé pour son assemblage

(30) Priority: 12.02.2010 IT PD20100041
(43) Date of publication of application: 24.08.2011
(73) Proprietor: Francom S.P.A., 36022 Cassola (VI) (IT)
(72) Inventor: Comunello, Luca, I-36022, Cassola (VI) (IT)
(74) Representative: Gallo, Luca

(56) References cited:
- EP-A2- 1 130 203
- US-A- 3 087 771
- US-A- 4 838 626

## Description

### Field of application

The present invention concerns a cabinet for vans and it applies to the industrial field of the production of professional equipment and accessories for vans or more generally to the field of equipment for vans.

The cabinet concerned allows objects, such as tools and equipment, to be placed and transported in a safe and organised manner to meet the professional requirements of companies in all manner of technological sectors (like for example telephony, plumbing, mechanics, electricity, etc.).

### State of the art

On the market there are different solutions of cabinets foreseen for equipping vans or similar, which are designed to use the space available inside the loading area of the van in an optimal way and usually comprise a metallic support structure fixed to the wall of the van inside which a plurality of drawers for containing objects to be transported is slidably inserted.

Patent US 4,191,436, for example, describes a known cabinet comprising a plurality of drawers arranged one on top of the other inside a metallic support structure fixed at the rear to the walls of the van.

In greater detail, the support structure consists of a metallic framework shaped like a parallelepiped, which comprises four vertical uprights rested on the floor of the van and connected together by horizontal cross members.

Each drawer is slidably supported inside the cabinet by a corresponding pair of telescopic guides arranged horizontally along the flanks of the support structure.

In greater detail, the aforementioned telescopic guide is formed from two arms able to slide inside one another, a first arm of which is in turn able to slide in a horizontal profile with a C-shaped section and fixed to two uprights of the support structure through suitable rivets, and a second arm is intended to support the drawer through first hooks.

For this purpose, each drawer has a horizontal metallic bar mounted on its side walls, intended to engage with the first hooks of the second arm of the guides to support the drawer.

Moreover, the cabinet is equipped, for each drawer, with a closing stop consisting of a second hook hinged on one of the uprights of the support structure and able to be made to rotate between a raised position, in which the hook does not interfere with the sliding of the drawer, and a lowered position, in which the hook grips onto a pin projecting from a side wall of the drawer to hold it inside the support structure in closed position.

The known solution for a cabinet briefly described above has in practice proven to have some drawbacks.

A first drawback derives from the fact that such a known cabinet foresees the use of guides and drawers that are constructively complex and expensive with consequent high product costs.

A further drawback is the fact that the known cabinet described above foresees long mounting times to fix all of the guides to the uprights of the metallic structure through suitable rivets.

A further drawback is the fact that the presence of the guides on both sides of the metallic structure makes the cabinet difficult to couple with other modules that make up the van's equipment.

A further drawback is the fact that the drawers of the known cabinet described above do not deaden the vibrations transmitted by the van due to the roughness of the ground. Such vibrations can cause the safety stops to release consequently opening the drawers when not wished and allowing the objects contained inside them to fall out.

Patent US 2008/0180009 describes a cabinet equipped with a box-shaped support structure, having two parallel side walls connected together by a lower wall and by an upper wall. The support structure is open at the front to allow many drawers arranged vertically on top of one another to be inserted inside it.

Each drawer is slidably supported inside the support structure by a pair of telescopic guides arranged horizontally along the side walls of the support structure itself.

In greater detail, each side wall of the cabinet has a support panel fixed inside it to which the guides of the drawers are in turn fixed. In particular, the support panel is equipped with peripheral projecting portions, which are obtained through folds of the support panel itself and rest on the corresponding side wall, so as to define an interspace between the support panel and the side wall.

Moreover, each telescopic guide is formed from two arms able to slide inside one another, a first arm of which is intended to laterally support the drawer, and a second arm is in turn able to slide in a horizontal profile with C-shaped section, which is fixed to the relative support panel through flexible clips able to be snap-inserted inside corresponding holes formed on the support panel itself.

Patent US 5,470,143 describes a cabinet equipped with a box-like support structure, inside of which many drawers are slidably inserted arranged vertically on top of one another, and each supported by a pair of telescopic guides arranged horizontally along the side walls of the support structure itself.

In greater detail, the support structure comprises two tubular support bodies fixed vertically to the inner surface of each side wall and intended to support the aforementioned guides of the drawers. In particular, each telescopic guide comprises a horizontal C-shaped metallic profile, which is fixed to the tubular support bodies through its own hook-shaped fastening teeth, snap-inserted in corresponding holes formed on the tubular bodies themselves.

The main drawback of the cabinets described in US 2008/0180009 and in US 5,470,143 consists of the fact that they cannot be used to transport objects inside vans, since they do not foresee closing stops of the drawers that prevent the latter from opening following vibrations transmitted to the drawers by the van during travel.

A further drawback of the cabinets described in patents US 2008/0180009 and US 5,470,143 is the fact that the vibrations of the drawers, transmitted by the van, inside the support structure of the cabinet generate a high and undesired level of noise.

A further drawback derives from the fact that the known cabinets described in patents US 2008/0180009 and US 5,470,143 foresee the use of guides and drawers that are constructively complex and expensive with consequent high production costs.

Patent DE 102004005362 describes a cabinet for vans, which comprises a support structure equipped with a horizontal base panel on which many drawers rest arranged alongside one another, and a plurality of guides fixed to the base panel and suitable for guiding the sliding of the drawers between a closed position and an open position.

In greater detail, each guide has a substantially elongated shape according to the sliding direction of the drawer, and at a front end thereof has a rigid blocking portion extending projecting from an upper wall of the guide itself.

Each drawer is equipped at its lower corners with a longitudinal groove, in which the corresponding guide is inserted. In greater detail, the height of each longitudinal groove is greater than the height of the blocking portion of the guide, so that the drawer rests with a lower wall thereof on the base panel.

Moreover, there are two interference portions arranged inside each longitudinal groove of the drawer, positioned at a lower height than that of the blocking portion of the guides, and able to go in abutment against such a blocking portion to stop the sliding of the drawer in the closed or open position. In greater detail, there is a first interference portion arranged at a front wall of the drawer and intended to go into abutment on the blocking portion of the guide when the drawer is in closed position, and a second interference portion arranged at a rear wall of the drawer and intended to go into abutment on the blocking portion of the guide when the drawer is in open position.

Operatively, in order to take the drawer from the closed position to the open position it is necessary to lift the drawer so as to raise the first interference portion of the drawer above the blocking portion of the guide, and pull the drawer until it is brought into open position, with the second interference portion in abutment on the blocking portion of the guide.

In order to completely extract the drawer it is necessary to lift the latter, so as to raise the second interference portion of the drawer beyond the blocking portion of the guide.

A first drawback of the cabinet described in DE 102004005362 is the fact that the drawers do not deaden the stresses transmitted by the van during its travel. The consequent vibrations due to the clearances between the drawers and the guides, produce a high and annoying level of noise inside the van, and promote the wearing or deterioration of the guides and of the drawers.

A further drawback of the cabinet described in DE 102004005362 is due to the fact that the drawers are kept still resting on the base panel just by the action of the force of gravity, and therefore the bumps transmitted by the van to the drawers can make the latter lift up with their first interference portions beyond the blocking portion of the guides, with a consequent undesired opening of the drawers and the objects contained inside them falling out.

A further drawback of the cabinet described in DE 102004005362 consists of the fact that the drawer in its open position cannot project further than half of its length outside of the base panel to avoid the drawer itself tipping up, substantially limiting the accessibility of the user to the objects contained in the drawer. Moreover, it is necessary to arrange the base panel with a relatively great depth and much greater than the length of the drawers to support the latter in their open position, with a consequent increase in the bulk of the cabinet inside the van.

A further drawback of the cabinet described in DE 102004005362 is due to the fact that the drawer rests with its lower wall on the support base of the support structure, with consequent high friction that hinders the sliding of the drawer and promotes the wearing of the parts in contact.

A further drawback of the cabinet described in DE 102004005362 consists of the fact that it does not allow easy removal of the drawer from the cabinet, since in order to completely extract the drawer the user must lift the latter and bring the second interference portions of the drawer beyond the blocking portions of the guides.

Document EP 1130203 discloses a cabinet comprising a drawer which is arranged inside a metallic support structure and is laid with its lower wall on the upper side of two guides for sliding on them between a closed and an open position.

In particular, the drawer is provided with a stop device mounted on the front wall of the drawer and able to engage with a projecting edge of the front side of the support structure for retaining the drawer in the closed position, and is provided with a stop portion on its rear wall able to go into abutment against the projecting edge of the support structure for stopping the drawer in the open position.

A drawback of the cabinet disclosed EP 1130203 is due to the fact that it is not suited to be used in a van, because the vibrations transmitted by the van can cause the stop device to disengage with the projecting edge of the support structure, consequently opening the drawer when not wished and allowing the objects contained inside to fall out.

Another drawback of the cabinet disclosed in EP 1130203 is due to the fact that in conditions of normal use the drawer often contains very heavy objects that during the extraction of the drawer develop a substantial inertia force which causes strong impact of the stop portion of the drawer against the support structure breaking the stop portion itself.

Document US 4,838,626 discloses a cabinet comprising a drawer which is arranged inside a metallic box, is slidably laid with its lower wall on the bottom panel of the box, and is provided with a stop device on its front wall to retain the drawer in the closed position. Furthermore, the drawer is provided with a spring on its rear wall, which is compressed against a rear panel of the box in order to push the stop device of the drawer in the closed position against a retaining tooth of the box which works as a safety closure of the drawer.

A drawback of the cabinet disclosed in US 4,838,626 is that it is not easy to be used, particularly in a van, because the drawer in the open position can fall out easily from the box.

Document US 3,087,771 discloses a cabinet comprising a plurality of drawers arranged one above the other inside a metallic support structure provided with lower guides which support on its upper side the corresponding drawer, and upper guides positioned spaced above the top side of the drawer and provided with flexible bands. The drawer is provided with shoes projecting upward from its top side and able to abut with the flexible bands of the upper guide. The flexible bands of the upper guide slidably engage the top side of the drawer and the shoes are in sliding contact with the bottom surface of the upper guides, in order to maintain the drawer horizontal during its sliding.

A drawback of the cabinet disclosed US 3,087,771 is that it is not suitable to be used in a van, because it is not able to deaden the vibrations transmitted by the van in movement. In fact, the sliding contact between flexible bands and drawer and between shoes and upper guides, causes the rapid deterioration of the bands and of the shoes, with the formation of large gaps between the drawer and the guides, which allow wide displacements of the drawer due the vibrations, involving the opening of the drawer when not wished and high and undesired level of noise.

### Presentation of the invention

In this situation, the main purpose of the present invention is to overcome the drawbacks of the prior art, by providing a cabinet for vans that is simple to use, and in particular that allows the user to have easy access to the objects placed in the drawer without any risk of the drawer suddenly falling out from the cabinet.

Another purpose of the present finding is to provide a cabinet for vans, which is constructively simple and cost-effective to make.

Another purpose of the present finding is to provide a cabinet for vans, which allows the user to extract the drawers from the cabinet in a simple and easy manner.

Another purpose of the present finding is to provide a cabinet for vans that is operatively totally safe and reliable, and the functionalities of which are not compromised by the vibrations transmitted by the roughness of the ground.

Another purpose of the present finding is to provide a cabinet for vans, which is easy to mount inside the van and can easily be used with any other module foreseen to equip the van.

### Brief description of the drawings

The technical characteristics of the finding, according to the aforementioned purposes, can be clearly seen from the content of the claims given below and the advantages thereof will become clearer in the following detailed description, made with reference to the attached drawings, which represent an embodiment given purely as an example and not for limiting purposes, in which:
- figure 1 shows a perspective view of the cabinet for vans object of the present invention;
- figure 2 shows a perspective view of the cabinet for vans illustrated in figure 1 in which the drawers have been removed;
- figure 3 shows a front view of the cabinet for vans illustrated in figure 2;
- figure 4 shows a section of the cabinet for vans illustrated in figure 1 according to the line IV - IV of the same figure 1;
- figure 5 shows a rear view of a detail of the cabinet for vans illustrated in figure 1 relative to a drawer and to the corresponding guides;
- figure 6 shows a front view of a detail of the cabinet object of the present invention relative to a drawer;
- figure 7 shows a perspective view of the drawer illustrated in figure 6 with some parts removed to better highlight others;
- figure 8 shows a side view of the drawer illustrated in figure 7;
- figure 9 shows a perspective view from below of the drawer illustrated in figure 7;
- figure 10 shows a perspective view of a detail of the cabinet for vans illustrated in figure 1 relative to a guide for the sliding of the drawers;
- figure 11 shows a side view of the guide illustrated in figure 10;
- figure 12 shows a perspective view from below of the guide illustrated in figure 10;
- figure 13 shows a detail of the cabinet illustrated in figure 1 relative to the lower panel of the cabinet with some parts removed to better highlight others;
- figure 14 shows a detail of the cabinet illustrated in figure 1 relative to a base panel suitable for supporting the guides for the sliding of the drawers;
- figure 15 shows a section view of the cabinet for vans illustrated in figure 3 according to the line XV - XV of the same figure 3;
- figure 16 shows a section view of the cabinet for vans illustrated in figure 3 according to the line XVI - XVI of the same figure 3.

### Detailed description of a preferred embodiment example

With reference to the attached drawings the cabinet for vans object of the present finding has been wholly indicated with 1.

In the attached figures for the sake of simplicity of illustration a cabinet 1 has been illustrated formed from two rows of drawers one on top of the other, each of which is obtained with six side-by-side drawers 2. However, it should be understood that the cabinet 1 can analogously consist of any number of drawers 2 (even in particular a single drawer), which can be arranged on one row, two rows or many rows and can have the same or different dimensions, without for this reason departing from the scope of protection of the present patent document.

All kinds of products, according to the intended use of the cabinet and more generally of the van, can be stored and transported inside the drawer 2 in a totally conventional manner.

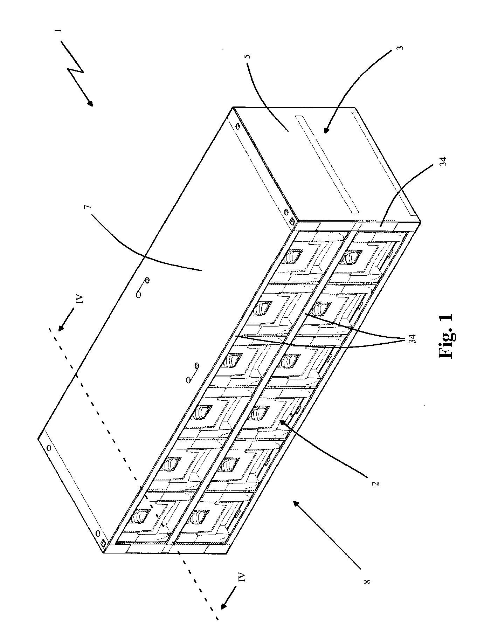

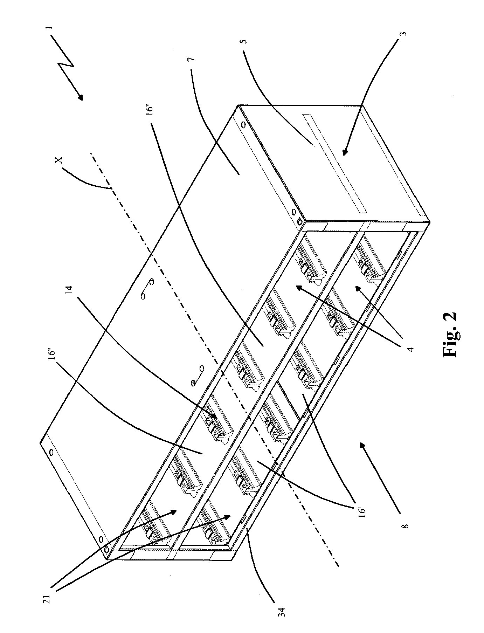

With reference to figures 1 - 3, the cabinet 1 for vans object of the present invention comprises a support structure 3 intended to be fixed inside the van.

In greater detail, the support structure 3 is substantially box-like in shape and defines at least one space 4 inside it in which the drawers 2 can be inserted, which can be made to slide along a sliding direction X between their closed position and their first open position.

The support structure 3 is preferably made from many metallic plates that are suitably bent and fixed together. In particular, the support structure 3 is equipped with two parallel and interfacing side panels 5, which are joined at the bottom by a base panel 6, intended to be fixed, for example, to the floor of the van or else to another module of the van's equipment, and are joined at the top by an upper panel 7 parallel to the base one 6. The support structure 3 is also equipped with an open front side 8 to allow the insertion and extraction of the drawers 2, and with a rear side 32 parallel to the front one 8 and intended to face towards a wall of the van.

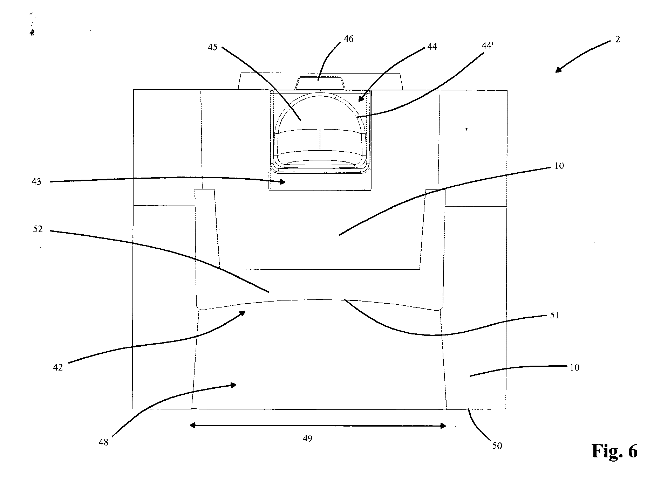

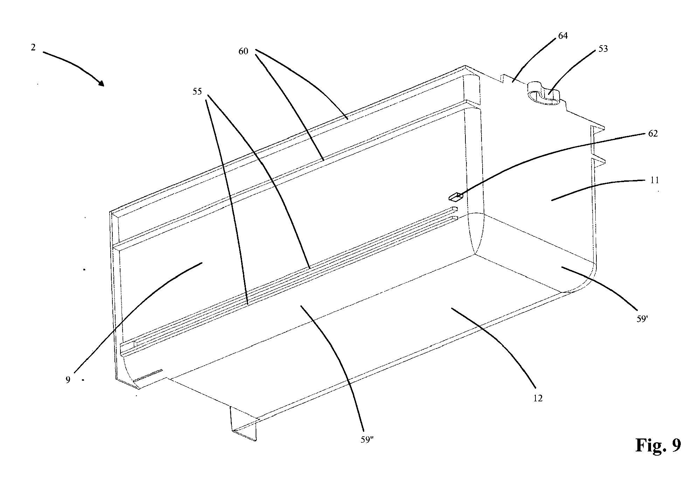

In accordance with the embodiment illustrated in figures 6 - 9, each drawer 2 of the cabinet 1 comprises two parallel and interfacing side walls 9, joined together by a front wall 10 intended to stay in view on the open front side 8 of the cabinet 1 and by a rear wall 11 parallel to the front one 10. The bottom of the drawer 2 is closed by a lower wall 12 connected to the side walls 9, front 10 and rear 11. In greater detail, the lower wall 12 is connected to the front wall 10 through a lower corner 50, and is connected to the rear wall 11 and to the two side walls 9 through a first rounded corner 59' and two second rounded corners 59", respectively, as will be described in detail hereafter. The drawer 2 is open on top to allow the insertion and extraction of the objects to be transported.

Moreover, the cabinet 1 comprises many guides 14 fixed to the support structure 3, which guide the drawers 2 to slide along their sliding direction X. In particular, each guide 14 comprises an elongated body 15, which is fixed to at least one horizontal support panel 16', 16" of the support structure 3, is arranged parallel to the sliding direction X of the drawers 2, and can be engaged with at least one of the drawers 2 to guide the sliding of the latter along the sliding direction X.

In accordance with the idea forming the basis of the present invention, the support structure 3 is equipped with a projecting edge 34 from the front profile of the space 4 of the support structure 3, said projecting edge 34 delimiting the access of the drawers 2 to the space 4 itself.

Moreover, each drawer 2 is provided with a stop device 44, which is mounted on its front wall 10, and comprises a control body 44' able to be made to move between a raised position, in which a projection 46 of the control body 44' itself engages with the projecting edge 34 of the support structure 3 to stop the drawer 2 in the closed position, and a lowered position in which the projection 46 is disengaged from the projecting edge 34 to allow the drawer 2 to be opened.

Each drawer 2 is also equipped with a stop portion 64 arranged at its rear wall 11, said stop portion 64 projecting on top from the drawer 2, and being able to go into abutment against the projecting edge 34 of the support structure 3 to stop the drawer 2 from sliding into the aforementioned first open position thereof.

The arrangement according to the present invention of the projecting edge 34, of the stop device 44 and of the stop portion 64 of the drawer 2, with the projecting edge 34 able to receive in abutment both the stop device 44 to stop the drawer 2 in the closed position, and the stop portion 64 to stop the drawer 2 in its first open position, involves a substantial constructive simplicity of the cabinet 1 object of the present invention, since it is not necessary to have distinct blocking elements to stop the drawer 2 in the closed position and in the first open position.

In accordance with the embodiment illustrated in the attached figures, the support structure 3 is equipped with many support panels 16', 16" of the guides 14, said panels 16', 16" being arranged parallel to the base panel 6 and to the upper panel 7 of the support structure 3 itself.

In greater detail, in accordance with the particular embodiment illustrated in figures 1 - 4, there are at least two first support panels 16' mounted side-by-side on the base panel 6 of the support structure 3 and a second support panel 16" fixed to the side panels 5 of the support structure 3 and preferably arranged in an intermediate position between the upper panel 7 and the base panel 6. In this way, the second support panel 16", with the other panels 5, 6, 7, and 16' of the support structure 3, defines two spaces 4 one on top of the other, each of which houses a row of drawers 2.

Each support panel 16', 16" is provided with many rows 70 of holes 19, 20 passing right through and aligned, and has a first face 21, facing towards the upper panel 7 of the support structure 3 and on which the elongated body 15 of the guides 14 rests, and a second face 27 opposite the first 21 and facing towards the base panel 6 of the support structure 3.

Each guide 14 is fixed to the support panel 16', 16" through fastening teeth 17, 18, which extend projecting from the elongated body 15 of the guide 2 and insert inside holes 19, 20 of the row 70 of holes engaging in a holding relationship with the support panel 16', 16" of the support structure 3.

With reference to figures 1 - 3, the guides 14 are arranged on the support panel 16', 16" parallel to one another and side-by-side a certain distance apart, so that each drawer 2 can be inserted between two adjacent guides 14 with the side walls 9 slidably engaged with the elongated body 15 of the guides 14 themselves.

In greater detail, between two adjacent drawers 2 of the same row there is a single guide 14, said elongated body 15 engaging with both of the drawers 2 at their adjacent side walls 9.

Advantageously, the guides 14, as well as guiding the sliding of the drawers 2 along the sliding direction X, prevent the drawers 2 inserted inside the support structure 3 from moving transversally to the sliding direction X itself.

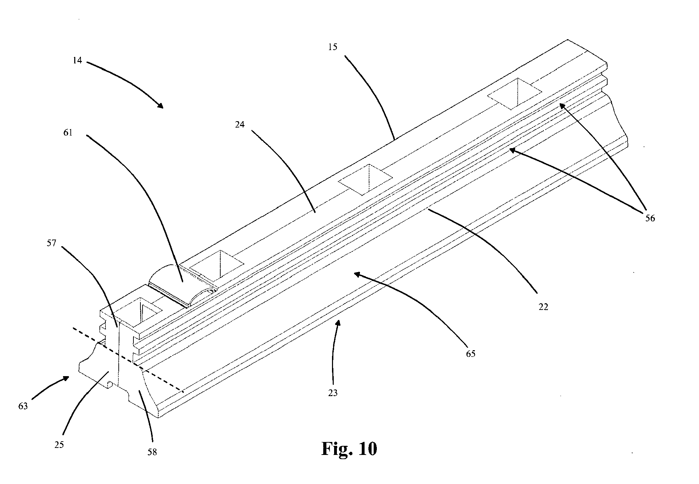

In accordance with the embodiment illustrated in figures 10 - 12, the elongated body 15 of the guides 14 comprises an internally hollow structure made from plastic material, equipped with two opposite flanks 22 intended to slidably engage with the drawers 2, with an open lower side 23 intended to rest on the first face 21 of the support panel 16', 16", and with an upper side 24 connecting the two flanks 22. Moreover, the elongated body 15 is closed at the ends by two end walls 25 that are parallel and opposite one another, each connecting the upper side 24 and the flanks 22.

Moreover, the elongated body 15 is equipped with many cross ribs 26, each of which preferably consists of a plate-shaped body arranged perpendicular to the extension of the elongated body 15 and extending into the hollow inside thereof connecting its two flanks 22.

Advantageously, the fastening teeth 17, 18 of the guides 14 comprise first fastening teeth 17 inserted inside corresponding first holes 19 of the rows 70 of holes 19, 20 formed on the support panel 16', 16" of the support structure 3.

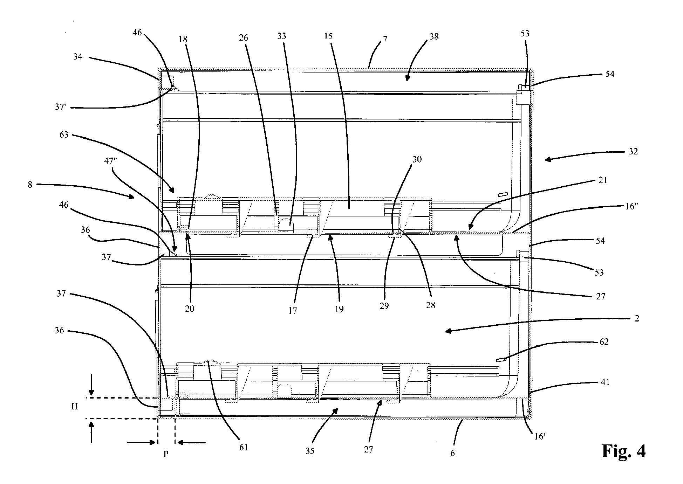

In greater detail, each first fastening tooth 17 is substantially hook-shaped and acts on the second face 27 of the support panel 16', 16" opposite the first face 21 (on which the elongated body 15 of the guide 14 rests) to hold the guide 14 fixedly connected to the support panel 16', 16", as illustrated for example in figure 4.

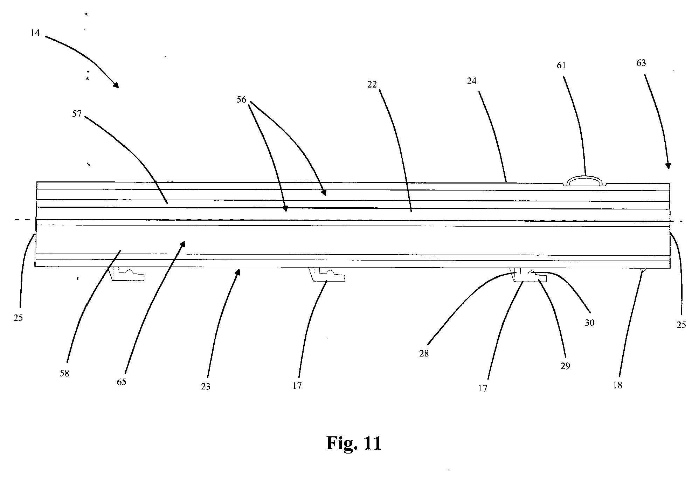

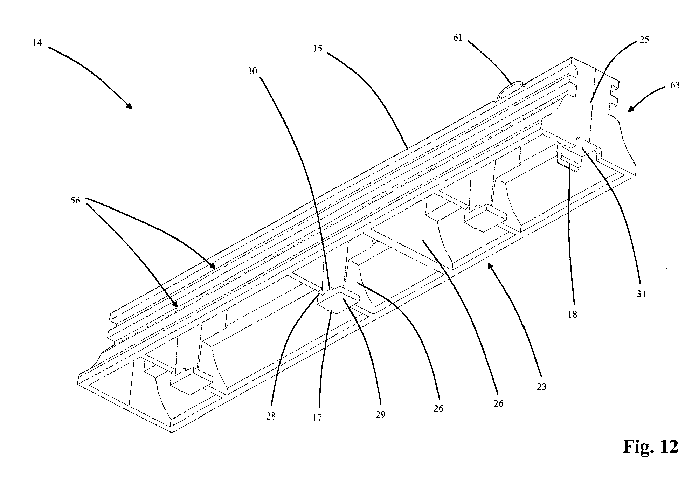

With reference to figures 11 and 12, each first fastening tooth 17 projects from the lower side 23 of the elongated body 15 extending preferably from one of the cross ribs 26 of the elongated body 15.

In greater detail, each first fastening tooth 17 comprises a first part 28 fixed to the cross rib 26 of the elongated body 15 and perpendicular to the lower side 23, and a second part 29 extending from the first 28, substantially perpendicular to the latter and parallel to the direction of extension of the elongated body 15.

Preferably, the second part 29 of the first fastening teeth 17 is equipped with a rounded projection 30 facing towards the lower side 23 of the elongated body 15 to make it easier to hold the guide 14, as will be described in detail hereafter.

Advantageously, the fastening teeth 17, 18 of each guide 14 comprise a second fastening tooth 18, which is fixed to the elongated body 15 through its own flexible portion 31 and is able to insert inside a corresponding second hole 20 of the row 70 of holes 19, 20 formed on the support panel 16', 16" following the elastic deformation of such a flexible portion 31.

In greater detail, as illustrated in the example of figure 12, the second fastening tooth 18 projects from the lower side 23 of the elongated body 15 and is connected through its flexible portion 31 to an end part 25 of the elongated body 15 itself.

In accordance with a particular embodiment of a solution, the fastening teeth 17, 18 are made in a single body with the elongated body 15 of the guide 14, preferably made from plastic material through moulding.

Advantageously, the support panel 16', 16" comprises , at each guide 14, a first directable tab 33, which can be deformed between a non-interfering position, in which the first directable tab 33 is co-planar to the support panel 16', 16" and does not interfere with the elongated body 15 of the guide 14, and an interference position, in which the first directable tab 33 projects from the first face 21 of the support panel 16', 16" and is able to interfere with the elongated body 15 of the guide 14 to limit its movements parallel to the sliding direction X of the drawer 2.

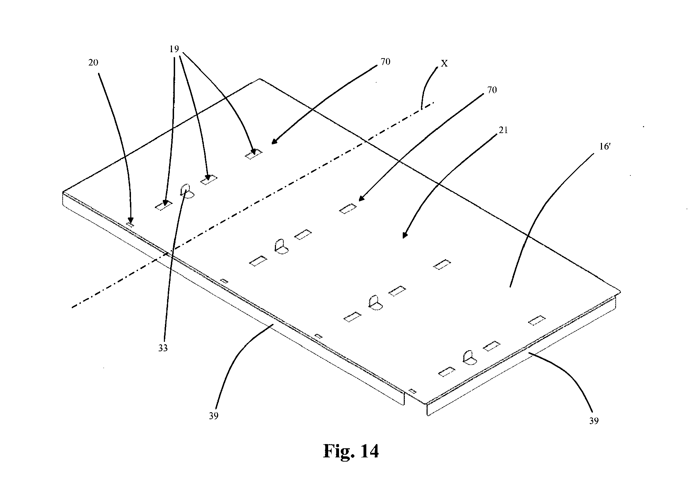

In greater detail, with reference to the embodiment illustrated in figures 4 and 14, each first directable tab 33 is arranged under the open lower side 23 of the elongated body 15 of the guide 14 and is aligned with the holes 19, 20 of the row 70 of holes formed on the support panel 16', 16".

In particular, the first directable tab 33 is obtained by carving from the sheet of the support panel 16', 16" of the support structure 3 and it is deformable between its non-interfering position and its interference position through a tool, like for example a screwdriver.

With reference to figure 4, the first directable tab 33 in its interference position projects from the first face 21 of the support panel 16', 16" entering into the hollow inside of the elongated body 15 of the guide 14 and is arranged substantially level with one of the cross ribs 26 of the elongated body 15, in particular behind such a rib 26 looking at the cabinet 1 from the rear side 8. In this way, the first directable tab 33 acts upon the rib 26 to prevent movements of the guide 14 parallel to the support panel 16', 16", in particular movements towards the rear side 32 of the support structure 3.

In accordance with the embodiment illustrated in figures 1 - 3, the projecting edge 34 of each space 4 of the support structure 3 of the cabinet 1 makes a frame of height H and depth P on the front side 8 of the support structure 3 around each space 4 in which the drawers 2 are inserted.

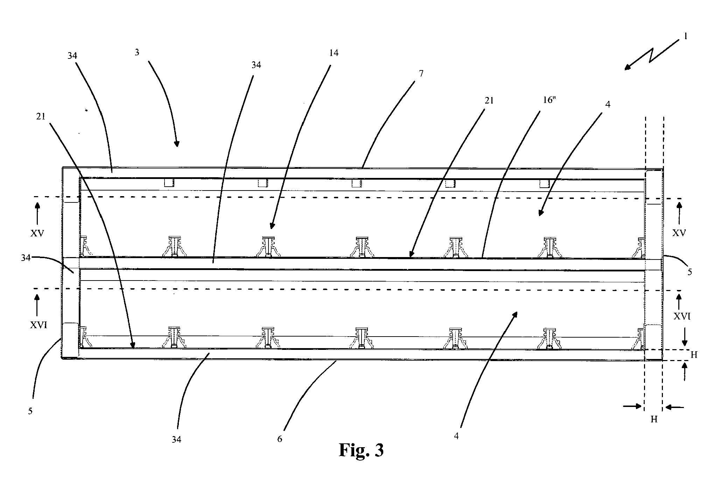

With reference to figures 3 and 4, the projecting edge 34 is made on the front profile of each space 4 extending from the side panels 5, from the base panel 6 and upper panel 7 and from the second support panel 16".

Advantageously, the projecting edge 34 is able to receive in abutment the projection 46 of the stop device 44 (when the drawer 2 is in closed position), i.e. the stop portion 64 of the drawer 2 (when the latter is in the first open position) at its horizontal portion that extends above the drawers 2, and that preferably extends downwards from the upper panel 7 and from the second support panel 16" of the support structure 3 (in accordance with the particular example embodiment illustrated in figure 4).

Preferably, the projecting edge 34 is made through at least two bends in succession of the aforementioned panels 5, 6, 7, 16', 16" ofthe support structure 3.

In greater detail, the projecting edge 34 comprises a first section 36 obtained with a first bend of the support structure 3 and co-planar to the front side 8 of the support structure 3 itself, and a second section 37 obtained with a second bend of the support structure 3, perpendicular to the first section 36 and extending towards the inside of the cabinet 1. In particular, the first section 36 defines the height H of the frame made by the projecting edge 34 and the second section 37 defines the depth P ofthe frame itself.

Advantageously, the height H ofthe projecting edge 34 made on the side panels 5 of the support structure 3 is no less than half the width of the lower side 23 of the elongated body 15 of the guides 14, so as to allow the housing of the guides 14 arranged at the ends of the rows of drawers 2.

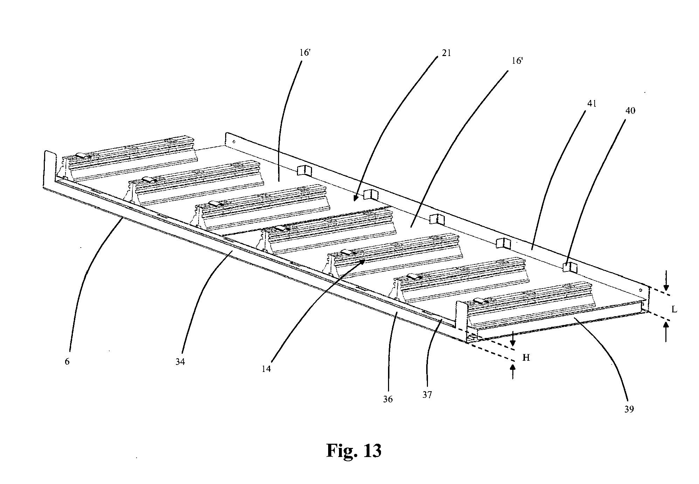

As illustrated in the example of figure 13, the two first support panels 16' are supported by the base panel 6 mounted below the support structure 3.

In greater detail, each first support panel 16' is kept spaced from the base panel 6 through its projecting portions 39 preferably of the same height H as the projecting edge 34 of the base panel 6 so that the second section 37 of the projecting edge 34 and the first support panels 16' lie substantially on the same horizontal plane.

Advantageously, the base panel 6, with the first support panels 16', defines a first interspace 35 for the insertion of attachment means (not illustrated) of the support structure 3 to the van, or else to other modules that are part of the van's equipment.

The attachment means can be obtained, for example, with first screws or bolts engaged in third holes or slots formed on the base panel 6 of the support structure 3 and housed in the aforementioned first interspace 35.

Moreover, the side 5 and upper 7 panels of the support structure 3, with the drawers 2 inserted in the spaces 4, define second interspaces 38 for the insertion of further attachment means of the side panels 5 and/or of the upper panel 7 to the van or to the other modules of the equipment.

Advantageously, the first support panels 16' are kept fixedly connected to the base panel 6 through second directable tabs 40 projecting towards the inside of the space 4 from a plate 41 arranged on the rear side 32 of the support structure 3.

In accordance with the embodiment illustrated in figure 13, such a plate 41 is obtained with a third bend of the base panel 6 made along its rear profile and extends towards the upper panel 7 with a width L greater than the height H of the projecting edge 34. Preferably, the second directable tabs 40 are obtained by carving from the sheet of the plate 41.

Operatively, after the two first support panels 16' have been arranged side-by-side on the base panel 6 of the support structure 3, the second directable tabs 40 are bent (for example with a tool such as a screwdriver) projecting towards the inside of the space 4 being arranged substantially level above the first support panels 16' to prevent them from lifting from the base panel 6.

Moreover, the first support panels 16' can be fixed to the base panel 6 through, for example, second screws screwed to the plate 41 of the base panel 6 and to the projecting portions 39 of the first support panels 16'.

In accordance with the embodiment illustrated in figures 6 - 9, the front wall 10 of each drawer 2 is shaped so as to define a handle 42 and a seat 43, the latter for housing the stop device 44 suitable for allowing the drawer 2 to be blocked and unblocked with respect to the support structure 3.

In greater detail, as stated earlier, the stop device 44 consists of the aforementioned control body 44', preferably made from plastic material, and equipped with a grip portion 45 on which to act manually with the finger of a hand to move the control body 44' from its raised position, in which the projection 46 of the control body 44' engages with the projecting edge 34 of the support structure 3 to stop the drawer 2 closed, to its lowered position in which the projection 46 is disengaged from the projecting edge 34 to allow the drawer 2 to open.

In greater detail, with reference to the embodiment illustrated in figure 4, when the drawer is in closed position, the projection 46 of the control body 44' engages with an inner profile 37' of the projecting edge 34, preferably defined by its second section 37.

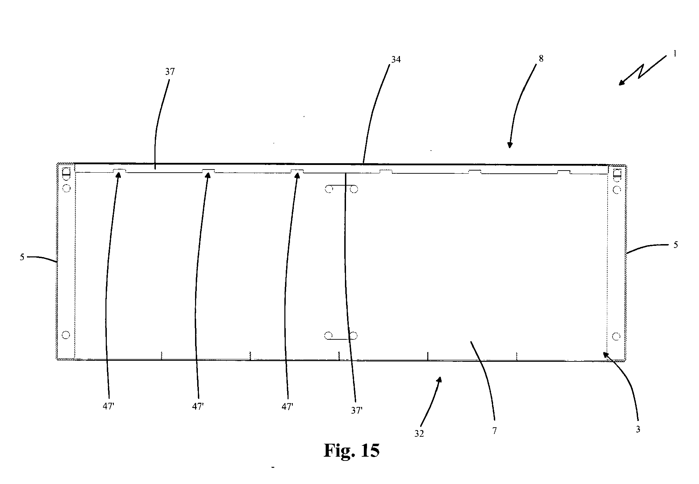

Advantageously, with reference to the embodiment illustrated in figure 15, the inner profile 37' of the projecting edge 34 is shaped with many recesses 47', in each of which the corresponding projection 46 of the control body 44' of the stop device 44 is inserted when the drawer 2 is in closed position. Such recesses 47' advantageously allow the drawer 2 to be better constrained against movements transversal to the sliding direction X of the drawer 2 itself.

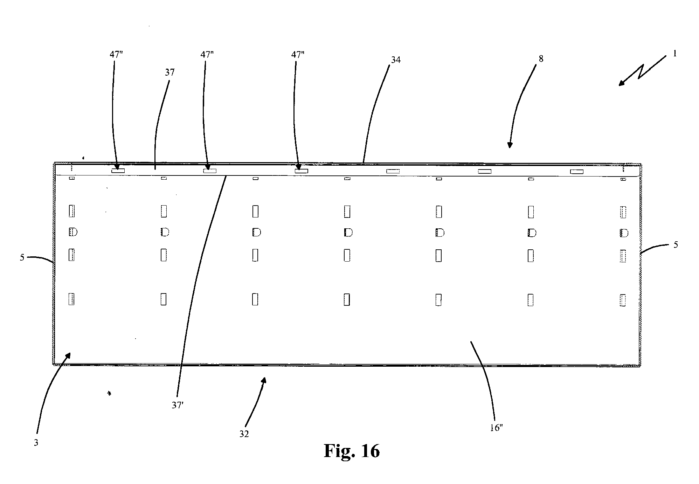

With reference to a different embodiment illustrated in figure 16, on the second section 37 of the projecting edge 34 fourth holes 47" are formed that are distanced from the inner profile 37', each of said holes 47" having the corresponding projection 46 of the control body 44' of the stop device 44 engage in it when the drawer 2 is in closed position.

Between the bottom of the seat 43 formed in the front wall 10 of the drawer 2 and the control body 44' of the stop device 44 elastic means (not illustrated) are arranged, which force the control body 44' towards the raised position. The stop device 44 is described in detail in the text of patent EP 1894784, which should be considered attached for reference from paragraph 34 to paragraph 37.

Moreover, the projection 46 of the stop device 44 is shaped with extension that tapers towards the rear wall 11 of the drawer 2. In this way, when the drawer 2 is moved from the first open position to the closed position, the projecting edge 34 of the support structure 3 acts on the tapered part of the projection 46 lowering it, until the latter goes past the inner profile 37' of the projecting edge 34 (in accordance with the embodiment illustrated in figure 15), or rather when the projection 46 enters into the corresponding fourth hole 47" formed on the second section 37 of the projecting edge 34 (in accordance with the different embodiment illustrated in figure 16). In this way, a user can easily close the drawer 2 without having to act on the grip portion 45 of the stop device 44.

The handle 42 formed by moulding in the shape of the front wall 10 of the drawer 2 is obtained thanks to a depression 48 that extends, for a section 49 of the width of the drawer 2, from the lower corner 50 of the front wall 10 up to a horizontal handgrip portion 51 on which to grip to make the drawer 2 slide open.

In greater detail, the aforementioned handgrip portion 51 extends and proceeds downwards with a grip portion 52 that is easy to pull to open the drawer 2.

Advantageously, each drawer 2 is provided with a first elastically yielding body 53 mounted on its rear wall 11, which is able to be compressed against an abutment body 54 arranged on the rear side 32 of the support structure 3, when the drawer 2 is in its closed position, keeping the projection 46 of the stop device 44 elastically in abutment against the projecting edge 34 of the support structure 3.

In greater detail, the first elastically yielding body 53 consists of a flexible appendage preferably made in a single body with the rear wall 11 of the drawer 2 through moulding.

In accordance with the embodiment illustrated in figures 6 - 9, such a flexible appendage has an arched shape with the concavity facing towards the rear side 32 of the support structure 3.

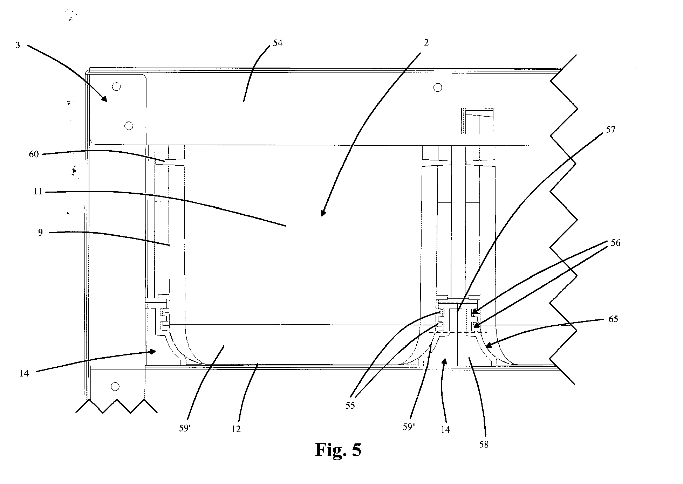

With reference to figures 4 and 5, the abutment body 54 of the support structure 3 is obtained with a fourth bend made on the upper panel 7, i.e. on the second support panel 16", it lies on the rear side 32 of the support structure 3 and it extends downwards at least up to the height of the first elastically yielding body 53 of the drawer 2 inserted in the space 4.

Operatively, when the drawer 2 is brought into its closed position, with the projection 46 of the stop device 44 engaged with the projecting edge 34 of the support structure 3, the first elastically yielding body 53 is compressed by the rear wall 11 of the drawer 2 against the abutment body 54. The first elastically yielding body 53 tends to thrust the drawer 2 towards the front side 8 of the support structure 3 so as to keep the projection 46 of the stop device 44 in abutment against the projecting edge 34.

In this way, the first elastically yielding body 53 keeps the drawer 2 still inside the space 4 of the support structure 3 compensating for the clearances between the drawer 2 and the support structure 3 and between the drawer 2 and the guides 14, said clearances being necessary to allow easy insertion of the drawer 2 and to allow it to slide with respect to the guides 14 and to the support structure 3.

Moreover, the arrangement of the first elastically yielding body 53 according to the present invention allows the vibrations transmitted to the drawer 2 by the van while travelling to be absorbed, substantially increasing the comfort of the driver of the van and preventing such vibrations from damaging the drawers 2 and/or the guides 14.

Each drawer 2 comprises first ribs 55 extending projecting from its side walls 9 and extending parallel to the sliding direction X. Such first ribs 55 are able to be slidably inserted inside corresponding grooves 56 formed on the flanks 22 of the elongated body 15 of the guides 14 arranged adjacent to the side walls 9 of the drawer 2.

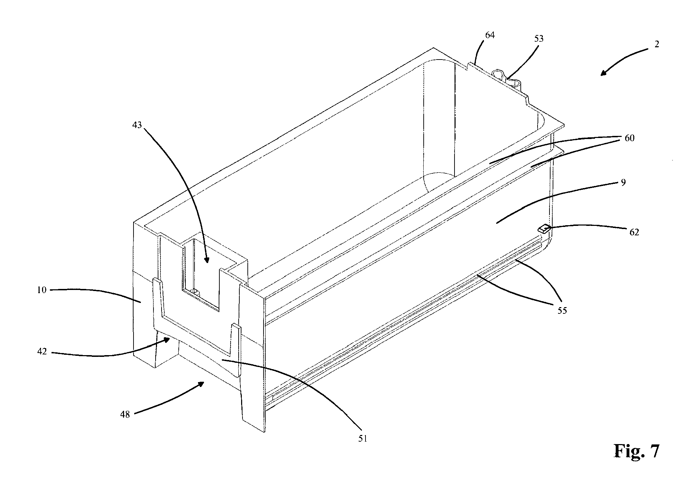

In greater detail, as illustrated in the example embodiment of figures 7 - 9, there are two first ribs 55 parallel to one another and spaced apart, preferably made in a single body with the side walls 9 of the drawer 2 through moulding.

With reference to figures 10 - 12, the grooves 56 are formed longitudinally on the flanks 22 of the guides 14 parallel to the extension of the elongated body 15.

In accordance with a different embodiment, the first ribs are made on the flanks 22 of the guides 14, whereas the grooves are formed on the side walls 9 of the drawer 2, i.e. on the side walls 9 of the drawer 2 there are both ribs and grooves intended to be slidably inserted, respectively, into corresponding grooves and ribs formed on the flanks 22 of the guides 14.

With reference to figure 5, each guide 14 is equipped with an upper portion 57 on which the grooves 56 are formed to receive the first ribs 55 of the drawer 2, and with a widened support base 58 intended to receive the lower wall 12 of the drawer 2 resting on it.

Advantageously, as stated earlier, the lower wall 12 of each drawer 2 is connected to the side walls 9 through the two second rounded corners 59". The support base 58 of the elongated body 15 of the guides 14 is provided with lateral sliding surfaces 65 that are countershaped with respect to the second rounded corners 59" of the lower wall 12 and it is able to receive such second rounded corners 59" resting on it keeping the lower wall 12 of the drawer 2 raised from the support panel 16', 16" of the support structure 3. In this way, during the opening and closing of the drawer 2 there is no friction between the lower wall 12 of the drawer 2 and the support panel 16', 16" of the support structure 3 facilitating the sliding of the drawer 2 itself and avoiding damage through wear of the lower wall 12.

Each drawer 2 is preferably made using a relatively elastic plastic material (for example polypropylene) to withstand the possible stresses to which the drawer 2 itself is subjected during the movement of the van itself without breaking or being damaged.

Advantageously, each drawer 2 is equipped on its side walls 9 with second reinforcement ribs 60 extending between tits front wall 10 and its rear wall 11. Such second ribs 60, together with the first ribs 55, give the drawer 2 greater structural rigidity, ensuring that it has adequate solidity and indeformability for the most varied intended uses.

Each guide 14 is equipped with a second elastically yielding body 61 extending projecting from its upper side 24 and able to receive in abutment a projecting body 62 fixed onto the outer face of the side walls 9 of the drawer 2, when the latter is brought into a second open position thereof, in which the stop portion 64 of the drawer 2 is distanced from the projecting edge 34 of the support structure 3.

In greater detail, with reference to the embodiment illustrated in figures 7 - 9, the projecting body 62, preferably made in a single body with the drawer 2, is arranged close to the rear wall 11 of the drawer 2. In particular, the projecting body 62 is positioned a shorter distance from the front wall 10 of the drawer 2 than the distance of the stop portion 64 of the drawer 2 from the front wall 10 itself.

Preferably, the projecting body 62 is arranged a certain height from the lower wall 12, so that, with the drawer 2 inserted between the guides 14, the projecting body 62 is arranged at a slightly greater height than that of the upper side 24 of the elongated body 15 and slightly lower than the second elastically yielding body 61.

With reference to the embodiment illustrated in figures 10 - 12, the second elastically yielding body 61 preferably consists of a flexible ring fixed to the upper side 24 of the elongated body 15, and is arranged near to a first end 63 of the elongated body 15 itself facing towards the front side 8 of the support structure 3.

Operatively, to take the drawer 2 from its closed position to its second open position, it is pulled towards the front side 8 of the support structure 3 sliding on the guides 14 until the projecting body 62 goes into abutment against the second elastically yielding body 61. In particular, when the drawer 2 is in its second open position, it is extracted from the space 4 of the support structure 3 for most of its length, with a shorter longitudinal section thereof still inside the space 4, in order to allow a user to gain easy access to the objects contained in the drawer 2 itself.

In order to continue to extract the drawer 2 and take it into its first open position, it is sufficient to pull its handle 42 further so that the projecting body 62 bends the second elastically yielding body 61 of the guide 14 downwards and passes over it to allow the drawer 2 to continue outwards, until the stop portion 64 of the drawer 2 goes into abutment against the projecting edge 34 of the support structure 3.

Advantageously, each projecting body 62 of the drawer 2 is shaped with its lower surface 80, which is inclined upwards in the direction of the rear wall 11 of the drawer 2, and is able to go into abutment against the second elastically yielding body 61 of the guide 14 when the drawer 2 is brought from its first open position towards its closed position to guide the projecting body 62 to pass over the second elastically yielding body 61.

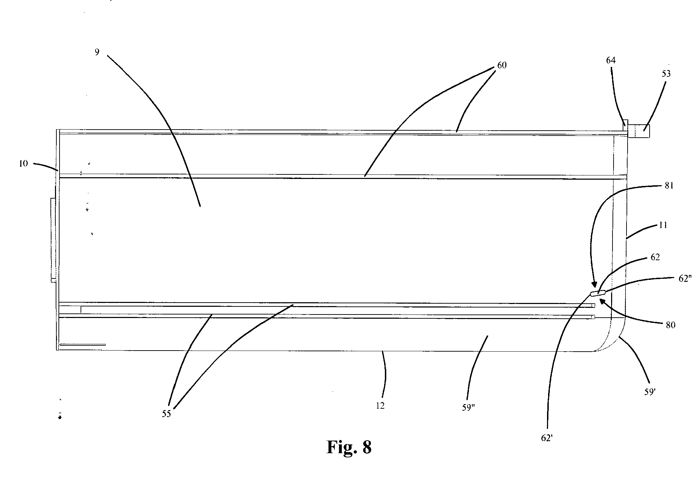

In greater detail, with reference to the embodiment illustrated in figure 8, each projecting body 62 of the drawer 2 has an elongated shape according to the longitudinal extension of the drawer 2 itself, and it is arranged inclined upwards in the direction of the rear wall 11 of the drawer 2.

In particular, the projecting body 62 is equipped with a first lower end portion 62' facing towards the front wall 10 of the drawer 2 and with a second higher end portion 62" facing towards the rear wall 11 of the drawer 2, said portions 62' 62" being connected together by the aforementioned lower surface 80 and by an upper surface 81.

Preferably, with the drawer 2 engaged with the guides 14, the first end portion 62' of each projecting body 62 is arranged at a slightly lower height than that of the second elastically yielding body 61 of the guide 14, so that when the drawer 2 is taken from the closed position to the second open position, the projecting body 62 goes into abutment with its first lower end portion 62' against the second elastically yielding body 61 of the guide 14 hindering the extraction of the drawer 2, to warn the user that the drawer 2 has reached the second open position.

Moreover, with the drawer 2 engaged with the guides 14, the second end portion 62" of each projecting body 62 is arranged at a slightly greater height than that of the second elastically yielding body 61 of the guide 14, so that when the drawer 2 is brought from the first open position towards the closed position, the projecting body 62 goes into abutment on the second elastically yielding body 61 with its lower surface 80 that guides it to pass over the second elastically yielding body 61 itself, facilitating the closing operation of the drawer 2.

The second elastically yielding body 61 of the guide 14 advantageously makes it possible to dampen the stopping of the drawer 2 in its second open position, by acting elastically on the projecting body 62.

Moreover, the second elastically yielding body 61 makes it possible to indicate to the user, while the drawer 2 is being opened, when the latter has come close to the first open position to stop it before the stop portion 64 of the drawer 2 goes into abutment against the projecting edge 34 of the support structure 3. This is particularly useful since in conditions of normal use the drawer 2 often contains rather heavy objects (for example 7 - 8 kg) that during the extraction of the drawer develop a substantial inertia force. The provision of the second elastically yielding body 61 of the guides 14 according to the present invention makes it possible both to attenuate the kinetic inertia that develops during the extraction of the drawer 2, and to warn the user that it has come close to the first open position to prevent the stop portion 64 of the drawer 2 from banging excessively hard against the projecting edge 34.

In accordance with a further different embodiment that has not been illustrated, each guide 14 is equipped with a third elastically yielding body arranged near to a second end of the elongated body 15 facing towards the rear side 32 of the support structure 3. Such a third elastically yielding body is able to receive in abutment the projecting body 62 of the drawer 2 to indicate to the user that the drawer 2 has come close to the closed position and to slow down the travel of the drawer 2 preventing the front wall 10 of the drawer 2 from banging excessively hard against the support structure 3.

The stop portion 64 of the drawer 2, which is able to go into abutment against the projecting edge 34 of the support structure 3 to stop the drawer 2 in the first open position, extends projecting upwards from the rear wall 11 of the drawer 2 itself.

The stop portion 64 stops the drawer 2 in the first open position after the drawer 2 has passed its second open position during the opening operation of the drawer 2 itself. In greater detail, the stop portion 64 stops the drawer 2 in the first open position after the projecting body 62 of the drawer 2 has passed the second elastically yielding body 61 of the guide 14, when the drawer 2 is pulled by the user towards the outside of the cabinet 1.

In accordance with the embodiment illustrated in the attached figures, the stop portion 64 of each drawer 2 goes into abutment against the inner profile 37' of the projecting edge 34 when the drawer 2 is moved into the first open position. In particular, the abutment of the aforementioned stop portion 64 takes place outside of the recesses 47' of the inner profile 37' (in which the projections 46 of the stop devices 44 insert when the drawer 2 is in closed position).

Preferably, with reference to the embodiment illustrated in figure 4, the elongated body 15 of each guide 14 is positioned in the space 4 with its first end 63 arranged in a more inner position with respect to the projecting edge 34 of the support structure 3, so that the drawer 2 in the first open position, with the stop portion 64 in abutment against the projecting edge 34, is disengaged from the elongated body 15 of the guide 14.

Advantageously, the stop portion 64 of the drawer 2 prevents the latter from being able to be suddenly extracted from the cabinet 1 by the user, allowing the user himself to open the drawer 2 without the risk of the drawer 2 falling onto him.

Moreover, the stop portion 64 allows the user to keep the drawer 2 in the first open position and to access the objects contained in it without the risk, also in this case, of the drawer 2 coming out from the space 4 of the cabinet 1 falling onto the user himself.

In greater detail, when the drawer 2 is in the first open position, in which it goes into abutment with the stop portion 64 against the projecting edge 34 and is disengaged from the corresponding guides 14, the drawer 2 rests with its lower wall 12 on the support panel 16', 16" of the support structure 3, and inclines slightly downwards through the effect of its own weight and, possibly, the weight of the objects contained inside the drawer 2 itself.

In order to completely extract the drawer 2 from the support structure 3, it is sufficient to rotate the drawer 2 upwards around the point of abutment of the stop portion 64 with the projecting edge 34 of the support structure 3, until the lower wall 12 of the drawer 2 comes out completely from the space 4 of the support structure 3.

Advantageously, the first rounded corner 59', which connects the lower wall 12 with the rear wall 11 of the drawer 2, is shaped with an arc of circumference shaped so as not to interfere with the support panel 16', 16" of the support structure 3 during the rotation of the drawer 2.

Moreover, the arrangement of the elongated body 15 of each guide 14 with its first end 63 arranged more inside than the projecting edge 34 further facilitates the extraction of the drawer 2 from the space 4 of the support structure 3, since the drawer 2 in its first open position is already disengaged from the guides 14.

Therefore, the cabinet 1 object of the present invention allows the user to extract the drawer 2 simply and easily. Such an advantage is particularly needed in the fields of use of cabinets for vans, since the user frequently needs to extract the drawers from the cabinet, for example to take them into the place of work where the objects contained in the drawers themselves are to be used, or else to take the drawers into a store and fill them with the desired objects.

Hereafter, we shall describe the assembly method of the cabinet 1 according to the invention keeping the same reference numerals as the preferred embodiment described earlier.

The assembly method of the cabinet 1 comprises a first operative step in which the elongated body 15 of the guides 14 is positioned on the support panel 16', 16" with the first fastening teeth 17 aligned with the first holes 19 of the row 70 of holes 19, 20 formed on the support panel 16', 16".

Thereafter, there is a second operative step in which the first fastening teeth 17 of the elongated body 15 are inserted into the first holes 19 until the elongated body 15 rests on the first face 21 of the support panel 16', 16" and the second fastening tooth 18 elastically bends its flexible portion 31 resting on the first face 21 of the support panel 16', 16".

In greater detail, the second part 29 of the first fastening teeth 17 is inserted inside the corresponding first hole 19 until it is arranged under the support panel 16', 16". Moreover, in this second operative step the second fastening tooth 18 is not aligned with the corresponding second hole 20 and goes into abutment on the support panel 16', 16", which thrusts the second tooth 18 towards the hollow inside of the elongated body 15 through elastic deformation of the flexible portion 31.

The assembly method of the cabinet 1 comprises a subsequent third operative step in which the elongated body 15 of the guides 14 is moved on the support panel 16', 16" taking the second fastening tooth 18 to snap-insert into the second hole 20.

In greater detail, the guide 14 on the support panel 16', 16" is moved parallel to the sliding direction X of the drawers 2 towards the front side 8 of the support structure 3, until the second fastening tooth 18 is aligned with the corresponding second hole 20 and snaps inside the latter following the return by the flexible portion 31 into its underformed position.

In particular, as illustrated in figure 4, the second fastening tooth 18 inserted in the second hole 20 goes into abutment against the support panel 16', 16" to prevent movements of the guide 14 towards the rear side of the support structure 3.

Moreover, following the movement of the guide 14 carried out in the second operative step, the second part 29 of the first fastening tooth 17 is taken outside of the port of the corresponding first hole 19 being arranged in abutment against the second face 27 of the support panel 16', 16" opposite the first face 21 on which the elongated body 15 rests. In greater detail, each first fastening tooth 17 acts with the rounded projection 30 of the second part 29 on the second face 27 of the support panel 16', 16" holding the elongated body 15 fixedly connected to the support structure 3 with the lower side 23 resting on the first face 21 of the support panel 16', 16".

Moreover, the first fastening teeth 17 are brought into abutment with their first part 28 inserted in the corresponding first hole 19 against the support panel 16', 16" of the support structure 3 preventing the guide 14 from moving towards the front side 8 of the support structure 3.

In particular, during the three operative steps described above, the first directable tabs 33 formed on the support panel 16', 16" are arranged in their non-interfering position, in which they are co-planar to the support panel 16', 16" without projecting from its first face 21 so as not to hinder the foreseen movements of the elongated body 15 of the guides 14 in the aforementioned assembly steps.

Advantageously, the assembly method of the cabinet 1 comprises a subsequent fourth operative step in which the first directable tab 33 is deformed from its non-interfering position to its interference position to ensure a further blocking of the guide 14 on the support panel 16', 16".

In greater detail, the first directable tab 33 is bent upwards with a tool and projects from the first face 21 of the support panel 16', 16" entering into the hollow inside of the elongated body 15 of the guide 14, as illustrated in the example of figure 4. As described earlier, the first directable tab 33 in its interference position acts in abutment on a cross rib 26 of the elongated body 15 to prevent movements thereof parallel to the support panel 16', 16".

There is also a subsequent step of inserting the drawers 2 resting on two elongated bodies 15 of the guides 14. In greater detail, each drawer 2 is inserted into the space 4 of the support structure 3 with the first ribs 55 of the side walls 9 inserted in the corresponding grooves 56 formed on the flanks 22 of the elongated body 15 of the guides 14 and with the second rounded corners 59" of the lower wall 12 resting on the widened support base 58 of the elongated body 15 of the guides 14 themselves.

The finding thus conceived therefore achieves the predetermined purposes.

Of course, it can, in its practical embodiment, also take up different shapes and configurations to the one illustrated above, without for this reason departing from the present scope of protection.

Moreover, all of the details can be replaced with technically equivalent elements and the sizes, the shapes and the materials used can be whatever according to the needs.

## Claims

1. Cabinet (1) for vans, which comprises:
- a support structure (3) able to be fixed inside a van;
- at least one drawer (2) that can be inserted inside at least one space (4) defined by said support structure (3) through an open front side (8) of said support structure (3), and able to be made to slide along a sliding direction (X) between a closed position a first open position, and a second open position there between; said at least one drawer (2) being equipped with two side walls (9) substantially parallel and facing one another, and joined together by a front wall (10) able to remain in view on the front side (8) of said support structure (3), and by a rear wall (11) substantially parallel to said front wall (10) and able to be housed in said at least one space (4);
- at least two guides (14) fixed to said support structure (3), which guide said at least one drawer (2) to slide along said sliding direction (X);
each of said guides (14) comprising at least one elongated body (15) fixed to at least one support panel (16', 16") of said support structure (3), arranged substantially parallel to the sliding direction (X) of said at least one drawer (2) and able to engage with said at least one drawer (2) to guide the sliding of the latter along said sliding direction (X);
said support structure (3) being equipped with at least one projecting edge (34) from the front profile of said at least one space (4) of said support structure (3), said projecting edge (34) delimits the access of said at least one drawer (2) to said at least one space (4);
said at least one drawer (2) being provided with at least one stop device (44), which is mounted on the front wall (10) of said at least one drawer (2), and comprises a control body (44') able to be made to move between a raised position, in which a projection (46) of said control body (44') engages with the projecting edge (34) of said support structure (3) to stop said at least one drawer (2) in said closed position, and a lowered position in which said projection (46) is disengaged from said projecting edge (34) to allow said at least one drawer (2) to open;
said at least one drawer (2) being also equipped with a stop portion (64) arranged at the rear wall (11) of said at least one drawer (2), said stop portion (64) projecting at the top from said at least one drawer (2), and being able to go into abutment against the projecting edge (34) of said support structure (3) to stop said at least one drawer (2) from sliding in said first open position;
said cabinet (1) being **characterised in that**:
- said drawer (2) comprises at least two first ribs (55) extending projecting out from the side walls (9) of said drawer (2) parallel to said sliding direction (X); said first ribs (55) being able to be slidably inserted inside corresponding grooves (56), which are formed on sides (22) ofthe elongated body (15) of said guide (14) arranged adjacent to the side walls (9) of said drawer (2);
- each of said guides (14) is equipped with an elastically yielding body (61) extending projecting out from an upper side (24) of said elongated body (15) and able to receive in abutment at least one projecting body (62) fixed onto the outer face of the side walls (9) of said drawer (2), when the latter is brought into its second open position in which said stop portion (64) is distanced from the projecting edge (34) of said support structure (3);
- the projecting body (62) of the drawer (2) bends the elastically yielding body (61) of said guide (14) downwards, when passing over said elastically yielding body (61) toward said first open position.

2. Cabinet (1) for vans according to claim 1, **characterised in that** the elongated body (15) of said guides (14) is positioned in said space (4) with its own first end (63) arranged in a more inner position with respect to said projecting edge (34); said drawer (2) in said first open position with said stop portion (64) in abutment against said projecting edge (34) being disengaged from the elongated body (15) of said guides (14).

3. Cabinet (1) for vans according to claim 1, **characterised in that** said drawer is equipped with a lower wall (12) connected to said rear wall (11) through a first rounded corner (59'), which is shaped with an arc of circumference shaped so as not to interfere with the support panel (16', 16") of said support structure (3).

4. Cabinet (1) for vans according to claim 1, **characterised in that** said drawer (2) is provided with at least one elastically yielding body (53) mounted on its rear wall (11), said elastically yielding body (53) being able to be compressed against said support structure (3), when said drawer (2) is in its closed position, keeping the projection (46) of said stop device (44) elastically in abutment against the projecting edge (34) of said support structure (3).

5. Cabinet (1) for vans according to claim 3, **characterised in that** the lower wall (12) of said drawer (2) is connected to said side walls (9) through second rounded corners (59"); the elongated body (15) of said guides (14) being equipped with a support base (58) having lateral sliding surfaces (65) that are countershaped with respect to said second rounded corners (59") and are able to receive said second rounded corners (59") resting against them, lifting the drawer (2) from said support panel (16', 16").

6. Cabinet (1) for vans according to claim 1, **characterised in that** each projecting body (62) of said drawer (2) is shaped with its own lower surface (80), which is inclined upwards in the direction of the rear wall (11) of said drawer (2), and is able to go into abutment against the elastically yielding body (61) of said guide (14) when said drawer (2) is brought from its first open position towards its closed position to guide said projecting body (62) to ride over said elastically yielding body (61).

## Patentansprüche

1. Schubladenschrank (1) für Lieferwagen, der Folgendes umfasst:
- eine Stützkonstruktion (3), die in einem Lieferwagen befestigt werden kann;
- mindestens eine Schublade (2), die in mindestens einen von der Stützkonstruktion (3) definierten Raum (4) durch eine offene Vorderseite (8) dieser Stützkonstruktion (3) eingesetzt und betätigt werden kann, um längs einer Gleitrichtung (X) zwischen einer geschlossenen Stellung, einer ersten geöffneten Stellung und einer zweiten geöffneten Stellung zwischen diesen Letzteren zu gleiten; wobei diese mindestens eine Schublade (2) mit zwei Seitenwänden (9), die im Wesentlichen zueinander parallel sind und einander gegenüberliegen und durch eine Vorderwand (10), die auf der Vorderseite (8) der Stützkonstruktion (3) sichtbar bleiben kann, und eine im Wesentlichen zur Vorderwand (10) parallele Rückwand (11) miteinander verbunden sind, versehen ist und in dem mindestens einen Raum (4) untergebracht werden kann;
- mindestens zwei an der Stützkonstruktion (3) befestigte Führungen (14), welche die mindestens eine Schublade (2) zum Gleiten längs der Gleitrichtung (X) führen; wobei jede dieser Führungen (14) mindestens einen an mindestens einer Tragplatte (16', 16") der Stützkonstruktion (3) befestigten länglichen Körper (15) umfasst, der im Wesentlichen parallel zur Gleitrichtung (X) der mindestens einen Schublade (2) angeordnet und fähig ist, mit der mindestens einen Schublade (2) in Eingriff zu sein, um das Gleiten dieser Letzteren längs der Gleitrichtung (X) zu führen;
wobei die Stützkonstruktion (3) mit mindestens einem vom vorderen Profil des mindestens einen Raums (4) der Stützkonstruktion (3) vorstehenden Rand (34) versehen ist, wobei der vorstehende Rand (34) den Zugang der mindestens einen Schublade (2) zu dem mindestens einen Raum (4) begrenzt;
wobei die mindestens eine Schublade (2) mit mindestens einer Sperrvorrichtung (44) versehen ist, die auf die Vorderwand (10) der mindestens einen Schublade (2) montiert ist und einen Steuerkörper (44') umfasst, der betätigt werden kann, um sich zwischen einer angehobenen Stellung, in der ein Vorsprung (46) dieses Steuerkörpers (44') in den vorstehenden Rand (34) der Stützkonstruktion (3) eingreift, um die mindestens eine Schublade (2) in der geschlossenen Stellung zu halten, und einer abgesenkten Stellung zu bewegen, in der dieser Vorsprung (46) von dem vorstehenden Rand (34) gelöst ist, um das Öffnen der mindestens einen Schublade (2) zu ermöglichen;
wobei die mindestens eine Schublade (2) ferner mit einem Anschlagabschnitt (64) versehen ist, der auf Höhe der Rückwand (11) der mindestens einen Schublade (2) angeordnet ist, wobei dieser Anschlagabschnitt (64) oberhalb der mindestens einen Schublade (2) herausragt und gegen den vorstehenden Rand (34) der Stützkonstruktion (3) anschlagen kann, um das Gleiten der mindestens einen Schublade (2) in die geöffnete Stellung zu stoppen;
wobei der Schubladenschrank (1) **dadurch gekennzeichnet ist, dass**:
- die Schublade (2) mindestens zwei erste Rippen (55) umfasst, die sich von den Seitenwänden (9) der Schublade (2) vorstehend parallel zur Gleitrichtung (X) erstrecken; wobei diese ersten Rippen (55) gleitend in übereinstimmende Nuten (56) eingesetzt werden können, die in den Seiten (22) des länglichen Körpers (15) der Führungen (14) ausgebildet sind, die angrenzend an die Seitenwände (9) der Schublade (2) angeordnet sind;
- jede Führung (14) mit einem elastisch nachgiebigen Körper (61) versehen ist, der sich von einer Oberseite (24) des länglichen Körpers (15) vorstehend erstreckt und mindestens einen vorstehenden Körper (62), der auf der Außenseite der Seitenwände (9) der Schublade (2) befestigt ist, im Anschlag empfangen kann, wenn diese Letztere in ihre zweite geöffnete Stellung gebracht wird, in welcher der Anschlagabschnitt (64) vom vorstehenden Rand (34) der Stützkonstruktion (3) entfernt ist;
- der vorstehende Körper (62) der Schublade (2) den elastisch nachgiebigen Körper (61) der Führung (14) nach unten biegt, wenn er den elastisch nachgiebigen Körper (61) in Richtung der ersten geöffneten Stellung überquert.

2. Schubladenschrank (1) für Lieferwagen nach Anspruch 1, **dadurch gekennzeichnet, dass** der längliche Körper (15) der Führungen (14) in dem Raum (4) mit einem eigenen ersten Ende (63) angeordnet ist, das in Bezug auf den vorstehenden Rand (34) weiter innen angeordnet ist; wobei die Schublade (2) in der ersten geöffneten Stellung mit dem gegen den vorstehenden Rand (34) anschlagenden Anschlagabschnitt (64) vom länglichen Körper (15) der Führungen (14) gelöst ist.

3. Schubladenschrank (1) für Lieferwagen nach Anspruch 1, **dadurch gekennzeichnet, dass** die Schublade mit einer unteren Wand (12) versehen ist, die mit der Rückwand (11) durch eine erste abgerundete Kante (59') verbunden ist, die mit einem geformten Kreisbogen ausgeformt ist, um nicht mit der Tragplatte (16', 16") der Stützkonstruktion (3) zu interferieren.

4. Schubladenschrank (1) für Lieferwagen nach Anspruch 1, **dadurch gekennzeichnet, dass** die Schublade (2) mit mindestens einem auf die Rückwand (11) montierten elastisch nachgiebigen Körper (53) versehen ist, wobei der elastisch nachgiebige Körper (53) gegen die Stützkonstruktion (3) zusammengedrückt werden kann, wenn sich die Schublade (2) in ihrer geschlossenen Stellung befindet, und so den Vorsprung (46) der Sperrvorrichtung (44) elastisch im Anschlag gegen den vorstehenden Rand (34) der Stützkonstruktion (3) hält.

5. Schubladenschrank (1) für Lieferwagen nach Anspruch 3, **dadurch gekennzeichnet, dass** die untere Wand (12) der Schublade (2) mit den Seitenwänden (9) durch zweite abgerundete Kanten (59") verbunden ist; wobei der längliche Körper (15) der Führungen (14) mit einer Auflagebasis (58) versehen ist, die seitliche Gleitflächen (65) aufweist, die in Bezug auf die zweiten abgerundeten Kanten (59") gegengeformt sind und diese zweiten abgerundeten Kanten (59") aufliegend aufnehmen können, wobei sie die Schublade (2) von der Tragplatte (16', 16") anheben.

6. Schubladenschrank (1) für Lieferwagen nach Anspruch 1, **dadurch gekennzeichnet, dass** jeder vorstehende Körper (62) der Schublade (2) mit einer eigenen unteren Fläche (80) ausgeformt ist, die in Richtung der Rückwand (11) der Schublade (2) nach oben geneigt ist und gegen den elastisch nachgiebigen Körper (61) der Führung (14) anschlagen kann, wenn die Schublade (2) aus der ersten geöffneten Stellung in Richtung ihrer geschlossenen Stellung gebracht wird, um den vorstehenden Körper (62) so zu führen, dass er den elastisch nachgiebigen Körper (61) überquert.

## Revendications

1. Module de rangement à tiroirs (1) pour fourgons, lequel comprend :
- une structure de support (3) pouvant être fixée à l'intérieur d'un fourgon ;
- au moins un tiroir (2) qui peut être inséré à l'intérieur d'au moins un compartiment (4) défini par ladite structure de support (3) à travers une face avant ouverte (8) de ladite structure de support (3) et qui peut être actionné pour coulisser suivant une direction de coulissement (X) entre une position fermée, une première position ouverte, et une deuxième position ouverte entre celles-ci ; ledit au moins un tiroir (2) étant muni de deux parois latérales (9) sensiblement parallèles et opposées entre elles et unies entre elles par une paroi frontale (10) susceptible de rester visible sur la face avant (8) de ladite structure de support (3), et par une paroi postérieure (11) sensiblement parallèle à ladite paroi frontale (10) et susceptible d'être logée dans ledit au moins un compartiment (4) ;
- au moins deux guides (14) fixés à ladite structure de support (3), lesquels guident ledit au moins un tiroir (2) pour coulisser suivant ladite direction de coulissement (X) ;
chacun desdits guides (14) comprenant au moins un corps allongé (15) fixé à moins un panneau de support (16', 16") de ladite structure de support (3), disposé sensiblement parallèlement à la direction de coulissement (X) dudit au moins un tiroir (2) et susceptible de s'engager avec ledit au moins un tiroir (2) pour guider le coulissement de ce dernier suivant ladite direction de coulissement (X) ;
ladite structure de support (3) étant pourvue d'au moins un bord en saillie (34) à partir du profil avant dudit au moins un compartiment (4) de ladite structure de support (3), lequel bord en saillie (34) délimite l'accès dudit au moins un tiroir (2) audit au moins un compartiment (4) ;
ledit au moins un tiroir (2) étant muni d'au moins un dispositif d'arrêt (44), lequel est monté sur la paroi frontale (10) dudit au moins un tiroir (2) et comprend un corps de commande (44') actionnable pour se déplacer entre une position soulevée, dans laquelle une saillie (46) dudit corps de commande (44') s'engage avec le bord en saillie (34) de ladite structure de support (3) pour arrêter ledit au moins un tiroir (2) dans ladite position fermée, et une position abaissée dans laquelle ladite saillie (46) est désengagée dudit bord en saillie (34) pour permettre l'ouverture dudit au moins un tiroir (2) ;
ledit au moins un tiroir (2) étant muni, en outre, d'une portion d'arrêt (64) disposée en correspondance de la paroi postérieure (11) dudit au moins un tiroir (2), laquelle portion d'arrêt (64) fait saillie vers le haut dudit au moins un tiroir (2) et est susceptible de venir en butée contre le bord en saillie (34) de ladite structure de support (3) pour arrêter le coulissement dudit au moins un tiroir (2) dans ladite première position ouverte ;
ledit module de rangement à tiroirs (1) étant **caractérisé en ce que** :
- ledit tiroir (2) comprend au moins deux premières nervures (55) s'étendant en saillie à partir des parois latérales (9) dudit tiroir (2) parallèlement à ladite direction de coulissement (X) ; lesdites premières nervures (55) étant susceptibles d'être insérées de manière coulissante à l'intérieur de rainures homologues (56), lesquelles sont ménagées sur des côtés (22) du corps allongé (15) desdits guides (14) disposées adjacentes aux parois latérales (9) dudit tiroir (2) ;
- chaque dit guide (14) est pourvu d'un corps élastiquement souple (61) s'étendant en saillie à partir d'un côté supérieur (24) dudit corps allongé (15) et susceptible de recevoir en butée au moins un corps en saillie (62) fixé sur la face externe des parois latérales (9) dudit tiroir (2), quand ce dernier est amené dans sa deuxième position ouverte dans laquelle ladite portion d'arrêt (64) est éloignée du bord en saillie (34) de ladite structure de support (3) ;
- le corps en saillie (62) du tiroir (2) plie le corps élastiquement souple (61) dudit guide (14) vers le bas, quand enjambe ledit corps élastiquement souple (61) vers ladite première position ouverte.

2. Module de rangement à tiroirs (1) pour fourgons selon la revendication 1, **caractérisé en ce que** le corps allongé (15) desdits guides (14) est positionné dans ledit compartiment (4) avec sa première extrémité (63) disposée dans une position plus interne par rapport audit bord en saillie (34) ; ledit tiroir (2), dans ladite première position ouverte avec ladite portion d'arrêt (64) en butée contre ledit bord en saillie (34), étant désengagé par rapport au corps allongé (15) desdits guides (14).

3. Module de rangement à tiroirs (1) pour fourgons selon la revendication 1, **caractérisé en ce que** ledit tiroir est muni d'une paroi inférieure (12) reliée à ladite paroi postérieure (11) par l'intermédiaire d'une première arête arrondie (59'), laquelle est profilée avec un arc de circonférence profilé pour ne pas interférer avec le panneau de support (16', 16") de ladite structure de support (3).

4. Module de rangement à tiroirs (1) pour fourgons selon la revendication 1, **caractérisé en ce que** ledit tiroir (2) est muni d'au moins un corps élastiquement souple (53) monté sur sa paroi postérieure (11), lequel corps élastiquement souple (53) est susceptible d'être comprimé contre ladite structure de support (3), quand ledit tiroir (2) est dans sa position fermée, en maintenant la saillie (46) dudit dispositif d'arrêt (44) élastiquement en butée contre le bord en saillie (34) de ladite structure de support (3).

5. Module de rangement à tiroirs (1) pour fourgons selon la revendication 3, **caractérisé en ce que** la paroi inférieure (12) dudit tiroir (2) est reliée auxdites parois latérales (9) par l'intermédiaire de deuxièmes arêtes arrondies (59") ; le corps allongé (15) desdits guides (14) étant muni d'une base d'appui (58) ayant des surfaces latérales de coulissement (65) profilées de manière complémentaire par rapport auxdites deuxièmes arêtes arrondies (59") et adaptées pour recevoir en appui lesdites deuxièmes arêtes arrondies (59") en soulevant le tiroir (2) dudit panneau de support (16', 16").

6. Module de rangement à tiroirs (1) pour fourgons selon la revendication 1, **caractérisé en ce que** chaque corps en saillie (62) dudit tiroir (2) est profilé avec une propre surface inférieure (80), laquelle est inclinée vers le haut en direction de la paroi postérieure (11) dudit tiroir (2) et est susceptible de venir en butée contre le corps élastiquement souple (61) dudit guide (14) quand ledit tiroir (2) est amené de sa première position ouverte vers sa position fermée pour guider ledit corps en saillie (62) pour enjamber ledit corps élastiquement souple (61).
